# EUROPÄISCHE PATENTANMELDUNG

(11) **EP 2 330 306 A2**
(43) Veröffentlichungstag der Anmeldung: **08.06.2011**
(21) Anmeldenummer: 10401189.5
(22) Anmeldetag: 10.11.2010
(51) Int. Cl.: F16B 13/14

(54) **Abstandshalter zur Befestigung eines Gegenstands an einem eine Dämmschicht aufweisenden Untergrund**

(30) Priorität: 03.12.2009 DE 102009044748
(71) Anmelder: fischerwerke GmbH & Co. KG, 72178 Waldachtal (DE)
(72) Erfinder: Daly, Aaron, 72285 Pfalzgrafenweiler (DE)

(57) **Zusammenfassung**

Die Erfindung schlägt vor, einen Abstandshalter (1) für die Befestigung beispielsweise einer Markise an einem eine Dämmschicht (13) aufweisenden Untergrund (12) als Hülse (2) auszubilden, die aus lochscheibenförmigen Segmenten (3) zusammengesetzt ist, die nach Art einer Klauenkupplung formschlüssig ineinander greifend zusammengesteckt sind.

## Beschreibung

Die Erfindung betrifft einen Abstandshalter zur Befestigung eines Gegenstands an einem eine Dämmschicht aufweisenden Untergrund mit den Merkmalen des Oberbegriffs des Anspruchs 1. Der Untergrund ist beispielsweise eine gemauerte oder betonierte Wand eines Bauwerks.

Auf Wänden von beheizbaren Gebäuden werden zur thermischen Isolierung Dämmschichten angebracht, um einen Wärmeverlust zu verringern. Die Dämmschichten bestehen vielfach aus geschäumten Platten, die eine geringe mechanische Festigkeit aufweisen. Eine stabile Befestigung eines schweren oder auch eines Gegenstands mit großer Windangriffsfläche muss deswegen durch die Dämmschicht hindurch im bzw. am Untergrund erfolgen.

Die Befestigung kann beispielsweise mit einer oder mehreren Ankerstangen, beispielsweise Gewindestangen, erfolgen, die beispielsweise mit einem Dübel oder chemisch, beispielsweise mit Mörtel oder einem Kleber, im Untergrund verankert werden. Eine solche Ankerstange überbrückt die Dicke der Dämmschicht und ist stark auf Biegung beansprucht, weil eine Stützwirkung der Ankerstange durch die Dämmschicht vernachlässigbar ist.

Aus der Patentanmeldung EP 1 650 368 A2 ist es bekannt, eine Hülse mit einem axialen Durchgangsloch auf eine Ankerstange aufzusetzen, die in einem Untergrund verankert ist. Um Platz für die Hülse zu schaffen, ist ein Loch in der Dämmschicht angebracht, das etwas größer als die Hülse ist. Auf die Hülse ist ein Deckel aufgesetzt, der einen rohrförmigen Kragen aufweist, der mit seinem freien Ende ein Ende der Hülse umgreift. Dadurch ist eine Anpassung an eine Dicke des Dämmstoffs begrenzt auf weniger als eine Höhe des Kragens möglich. Ein von der Hülse im Deckel eingeschlossener Hohlraum wird mit einer aushärtenden Verfüllmasse, beispielsweise einem Mörtel oder einem Kleber, ausgefüllt. Mit einer auf die Ankerstange aufgeschraubten Mutter kann ein zu befestigender Gegenstand gegen den Deckel des Abstandshalters gespannt werden, der den gegen ihn gespannten Gegenstand über die Verfüllmasse und die Hülse am Untergrund abstützt.

Um eine Kältebrücke zu vermeiden, sieht die Offenlegungsschrift DE 10 2005 022 449 A1 eine Hülse aus Kunststoff als Verbinder vor, die ein Innengewinde aufweist, mit dem sie auf einen Ankerbolzen aufschraubbar ist. Das Innengewinde kann allgemein als Befestigungseinrichtung aufgefasst werden. Durch ein weiteres, gleichachsiges Gewinde ist der zu befestigende Gegenstand mit beispielsweise einer Schraube am Verbinder befestigbar.

Aufgabe der Erfindung ist, einen Abstandshalter zur Versteifung einer Ankerstange vorzuschlagen.

Diese Aufgabe wird erfindungsgemäß durch die Merkmale des Anspruchs 1 gelöst. Der erfindungsgemäße Abstandshalter weist eine Hülse mit einem Durchgangsloch auf, mit dem sie auf der Ankerstange anordenbar ist. Erfindungsgemäß ist die Hülse ein- oder mehrfach quergeteilt, sie weist in Längsrichtung hintereinander angeordnete Segmente auf. Das Durchgangsloch für die Ankerstange setzt sich durch alle Segmente fort. Durch eine unterschiedliche Anzahl an Segmenten lässt sich die Hülse einfach an die Dicke einer Dämmschicht anpassen. Die Hülse ummantelt die Ankerstange und erhöht die Steifigkeit gegen Biegung.

Die Segmente sind insbesondere alle gleich in Form und Größe, wodurch die Herstellung einfach wird.

In bevorzugter Ausgestaltung der Erfindung sind die Segmente der Hülse lochscheibenförmig, wobei die Segmente eine große Dicke aufweisen können, die größer als ihr Quermesser sein kann. Das Durchgangsloch muss nicht zentral sein, Stirnflächen der Segmente müssen nicht eben sein und die Segmente müssen nicht kreisförmig sein.

Eine bevorzugte Ausgestaltung der Erfindung sieht vor, dass die Segmente der Hülse formschlüssig ineinander greifen. Die Segmente können beispielsweise vergleichbar einer Klauenkupplung ausgebildet sein. Insbesondere ist ein Formschluss gegen seitliche Verschiebung der Segmente gegeneinander vorgesehen, so dass eine Schubkraft zwischen den Segmenten übertragen wird, was die Biegesteifigkeit erhöht. Eine andere Möglichkeit zur Erzielung einer hohen Biegesteifigkeit ist, dass die Hülse spielfrei auf der Ankerstange ist. Beide Maßnahmen können einzeln vorgesehen sein, ihre Kombination erhöht die Biegesteifigkeit.

Eine Ausgestaltung der Erfindung sieht vor, dass die Segmente ein Innengewinde aufweisen, mit dem sie auf ein Außengewinde der Ankerstange schraubbar sind. Die Verschraubung kann spielfrei vorgesehen sein, so dass die Hülse klemmend auf die Ankerstange aufgeschraubt werden muss. Die Spielfreiheit erhöht wie gesagt die Biegesteifigkeit des Abstandshalters. Die Gewindeverbindung zwischen den Segmenten und der Ankerstange überträgt Kräfte in Längsrichtung zwischen der Ankerstange und der Hülse, wodurch die Biegesteifigkeit selbst dann erhöht wird, wenn die Gewinde Spiel aufweisen.

Eine Ausgestaltung der Erfindung sieht vor, dass die Segmente Durchlässe für eine Verfüllmasse aufweisen. Als Verfüllmasse ist insbesondere eine aushärtende Masse, beispielsweise ein Mörtel, ein Klebstoff oder dgl. vorgesehen. Die Verfüllmasse füllt Hohlräume und die Durchlässe in und zwischen den Segmenten aus und ggf. verbindet sie die Segmente miteinander. Dadurch wird die Steifigkeit der Hülse erhöht.

Zur Vermeidung einer Wärmeleitung besteht die Hülse gemäß einer Ausgestaltung der Erfindung aus thermisch isolierendem Material, beispielsweise aus Kunststoff.

Zur Erhöhung der Biegesteifigkeit können die Segmente auch axial miteinander verspannt sein, wobei die Verspannung über die Ankerstange erfolgen kann. Eine Möglichkeit ist, dass die Segmente Innengewinde aufweisen und gegeneinander verdrehbar sind. Eine weitere Möglichkeit ist die Verspannung beispielsweise mit einer oder zwei auf die Ankerstange aufgeschraubten und gegen Stirnenden der Hülse festgezogenen Muttern. Die Aufzählung ist nicht abschließend.

Um eine Kältebrücke zu vermeiden, sieht eine Ausgestaltung der Erfindung einen thermisch isolierenden Verbinder vor, der eine Befestigungseinrichtung zur Befestigung an der Ankerstange aufweist. Die Befestigungseinrichtung kann beispielsweise ein Innengewinde sein, mit dem der Verbinder auf ein Außengewinde der Ankerstange schraubbar ist. Am Verbinder ist der zu befestigende Gegenstand befestigbar.

Zur Versteifung sieht eine Ausgestaltung der Erfindung eine Umwicklung der Hülse mit beispielsweise einem Stahlband oder einem Band hoher Zugfestigkeit vor, mit dem die Hülse vorzugsweise unter Spannung umwickelt wird bzw. ist. Die Umwicklung verbindet die Segmente zur Hülse und erhöht die Biegesteifigkeit. Zur Vereinfachung der Umwicklung kann ein Außenumfang der Hülse eine mit Steigung umlaufende Profilierung an ihrem Außenumfang aufweisen. Die Profilierung kann beispielsweise nach Art eines Gewindes, beispielsweise eines Trapez-, Rechteck- oder Sägezahngewindes ausgebildet sein, eine Steigung der Profilierung muss nicht konstant sein, sondern kann sich über eine Länge der Hülse (auch mehrfach) ändern.

Die Erfindung wird nachfolgend anhand eines in der Zeichnung dargestellten Ausführungsbeispiels näher erläutert. Es zeigen:
- Figur 1: einen erfindungsgemäßen Abstandshalter in Seitenansicht;
- Figur 2: einen Achsschnitt des Abstandshalters aus Figur 1.
- Figur 3: ein Segment des Abstandshalters aus Figur 1 in perspektivischer Darstellung mit Blick auf eine Stirnseite;
- Figur 4: eine perspektivische Darstellung des Segments aus Figur 3 mit Blick auf die andere Stirnseite; und
- Figur 5: zwei zusammengesetzte Segmente des Abstandshalters aus Figur 1 im Achsschnitt.

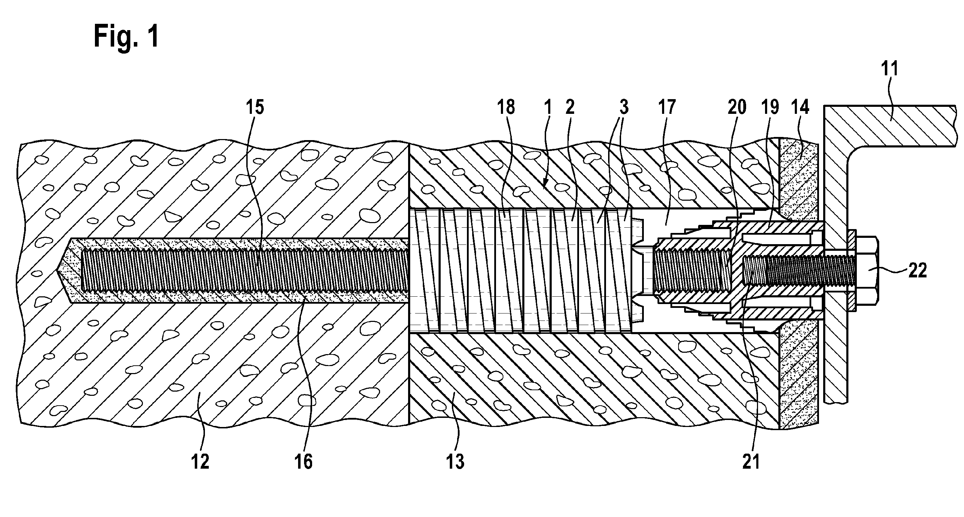

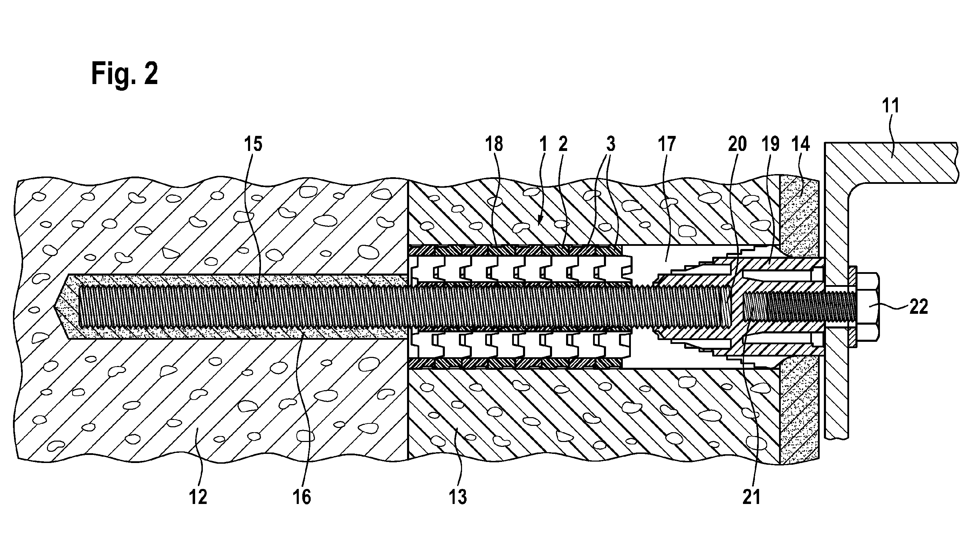

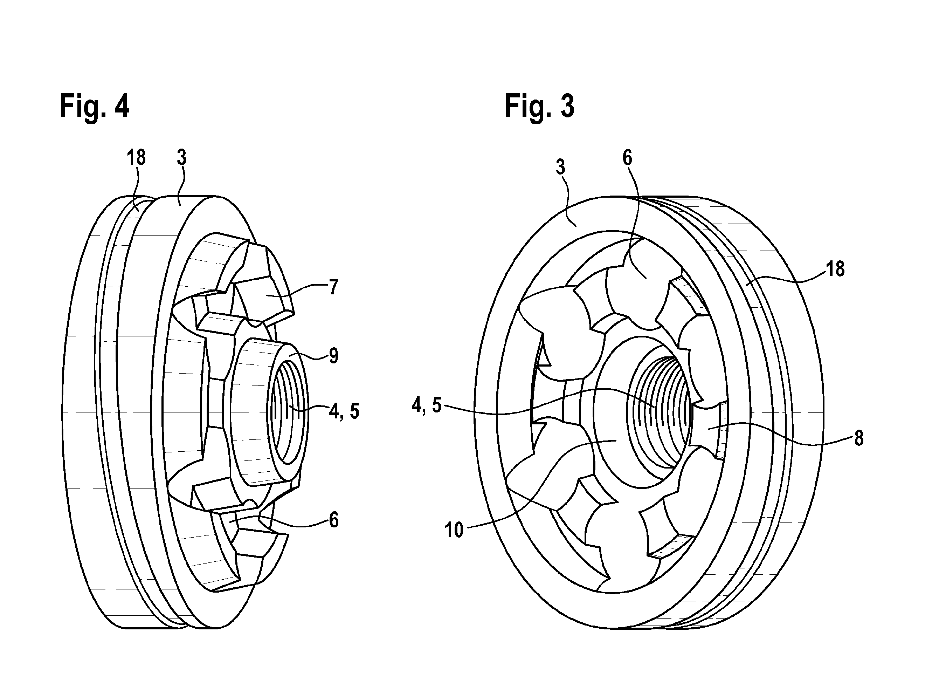

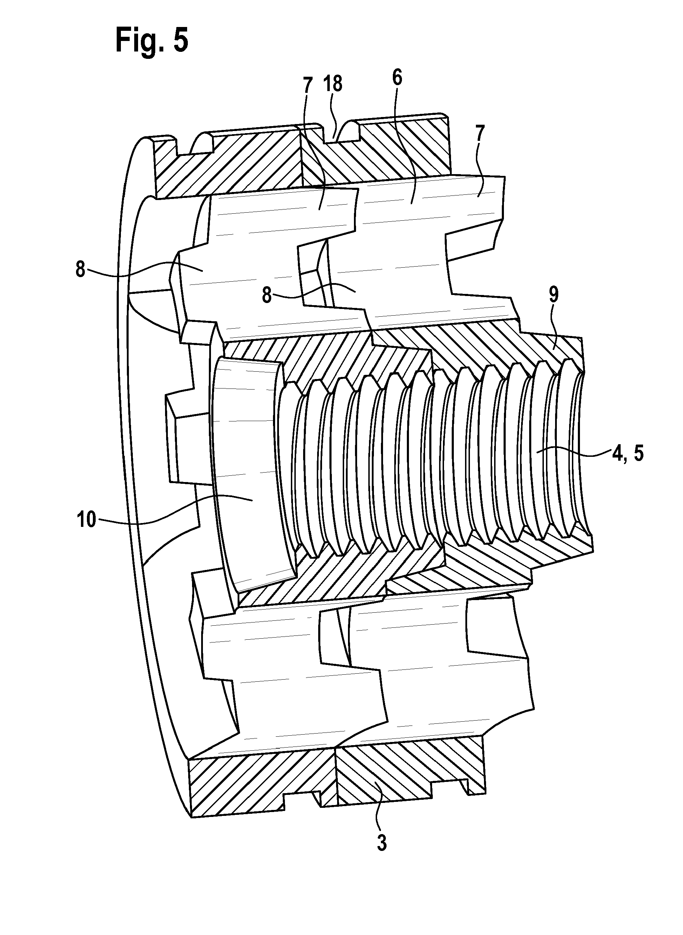

Der in Figuren 1 und 2 dargestellte, erfindungsgemäße Abstandshalter 1 weist eine Hülse 2 auf, die aus axial hintereinander angeordneten, lochscheibenförmigen Segmenten 3 zusammengesetzt ist. Eines der Segmente 3 ist in Figuren 3 und 4 gezeichnet. Die Segmente 3 sind lochscheibenförmig, kreisrund bzw. zylindrisch und weisen ein axiales Durchgangsloch 4 auf. Das Durchgangsloch 4 ist mit einem Innengewinde 5 versehen. Um das Durchgangsloch 4 herum weisen die Segmente 3 weitere Durchgangslöcher auf, die hier als Durchlässe 6 für eine Verfüllmasse bezeichnet werden. Von Stirnseiten der Segmente 3 stehen Klauen 7, 8 ab, die auf gedachten, konzentrischen, ineinander liegenden Kreisen angeordnet sind. Die Klauen 7, 8 greifen in kongruente Ausnehmungen in einer zugewandten Stirnseite des jeweils nächsten Segments 3 ein, wenn die Segmente 3 zusammengesetzt sind, wie es insbesondere in Figur 5 zu sehen ist. Durch die Klauen 7, 8 und die kongruenten Ausnehmungen sind die Segmente 3, vergleichbar den beiden Kupplungshälften einer Klauenkupplung, axial zusammensteckbar. Die zusammengesteckten Segmente 3 bilden die Hülse 2 des Abstandshalters 1. Die Segmente 3 bzw. ihre Klauen 7, 8 und die kongruenten Ausnehmungen greifen dabei formschlüssig ineinander. Ein das Mittelloch 4 umgebender Kragen 9, der auf einer Stirnseite der Segmente 3 absteht, greift in eine kongruente Ansenkung 10 des Mittellochs 4 des jeweils nächsten Segments 3. Es lässt sich eine beliebige Anzahl Segmente 3 zusammenstecken. Die Segmente 3 bestehen aus Kunststoff, d.h. aus einem thermisch isolierenden Material. Die um das Durchgangsloch 4 herum angeordneten Durchlässe 6 kommunizieren, wenn die Segmente 3 zusammengesteckt sind.

Der erfindungsgemäße Abstandshalter 1 dient, wie in Figuren 1 und 2 gezeigt, zur Befestigung eines Gegenstands, beispielsweise einer Konsole 11 an einem Untergrund 12, der eine Dämmschicht 13 aufweist. Der Untergrund 12 ist beispielsweise eine gemauerte oder betonierte Wand. Die Dämmschicht 13 besteht beispielsweise aus geschäumten Isolierstoffplatten. Auf der Dämmschicht 13 ist ein Putz 14 aufgetragen.

Zur Befestigung ist eine Ankerstange 15, im Ausführungsbeispiel eine Gewindestange, im Untergrund 12 verankert. Die Verankerung kann beispielsweise mit einem Spreizdübel erfolgen, im Ausführungsbeispiel ist die Ankerstange 15 in einem Sackloch 16 mit einem Mörtel, einem Kleber oder einer sonstigen, aushärtenden Masse befestigt, d.h. der Ankerbolzen 15 ist chemisch im Untergrund 12 verankert.

Eine Anzahl Segmente 3 ist zusammengesteckt zur Hülse 2 und mit den Innengewinden 5 der Segmente 3 auf ein Außengewinde der Ankerstange 15 geschraubt. Durch die Anzahl der Segmente 3 ist eine Anpassung einer axialen Länge der Hülse 2 an eine Dicke der Dämmschicht 13 möglich. Die aus den Segmenten 3 zusammengesetzte Hülse 2 liegt am Untergrund 12 an und ist vorzugsweise durch Schrauben auf der Ankerstange 15 gegen den Untergrund 12 gespannt. Die Hülse 2 befindet sich in einem Durchgangsloch 17, das den Ankerbolzen 15 umgebend in der Dämmschicht 13 angebracht ist.

Die auf der Ankerstange 15 angeordnete Hülse 2 versteift die Ankerstange 15 gegen Biegung. Die Versteifung wird erhöht durch den Eingriff der Innengewinde 5 der Segmente 3, die die Hülse 2 bilden, im Außengewinde der Ankerstange 15. Der Gewindeeingriff verhindert eine Axialverschiebung der Segmente 3 auf der Ankerstange 15, was die Versteifung der Ankerstange 15 gegen Biegung erhöht. Weiter wird die Versteifung durch ein Spannen der Hülse 2 gegen den Untergrund 12 durch Schrauben der Hülse 2 auf der Ankerstange 15 gegen den Untergrund 12 erhöht. Das formschlüssige Ineinandergreifen der Klauen 7, 8 in die kongruenten Ausnehmungen der Segmente 3 fixiert die Segmente 3 radial aneinander, so dass Schubkräfte zwischen den Segmenten 3 übertragen werden, was die Steifigkeit gegen Biegung der Hülse 2 und der Ankerstange 15 ebenfalls erhöht. Der Abstandshalter 1 ermöglicht aufgrund der hohen Steifigkeit eine Befestigung einer schwer belasteten Konsole 11 oder eines sonstigen, schweren Gegenstands am Untergrund 12 in einem von der Dämmschicht 13 vorgegebenen Abstand. Die Konsole 11 oder der Gegenstand selbst kann schwer sein oder eine hohe Last tragen. Die Last kann beispielsweise auch durch Windkraft, beispielsweise an einer Markise, entstehen.

Zur weiteren Erhöhung der Steifigkeit weisen die Segmente 3 eine mit einer Steigung umlaufende Nut 18 an ihrem Außenumfang auf. Im Ausführungsbeispiel weist die Nut 18 einen rechteckigen oder trapezförmigen Querschnitt auf. Die umlaufende Nut 18 bildet eine Art Gewinde am Außenumfang der Hülse 2. Im Ausführungsbeispiel ist eine Steigung der Nut 18 konstant, was allerdings nicht zwingend ist. In die Nut 18 der zur Hülse 2 zusammengesteckten Segmente 3 kann ein hier nicht dargestelltes Metallband oder ein sonstiges Band mit vorzugsweise hoher Zugfestigkeit und hohem Elastizitätsmodul gewickelt sein. Eine solche Umwicklung der Hülse 2 erhöht die Steifigkeit der Hülse 2 gegen Biegung weiter.

Die Ankerstange 15 steht auf einer dem Untergrund 12 abgewandten Seite aus der Hülse 2 vor. Dort ist eine Hülse als Verbinder 19 auf die Ankerstange 15 geschraubt. Der Verbinder 19 besteht aus Kunststoff, also einem thermisch isolierenden Material. Er vermeidet eine Kältebrücke zwischen der Ankerstange 15 und dem zu befestigenden Gegenstand 11. Der Verbinder 19 weist ein koaxiales Innengewinde 20 auf, mit dem er auf die Ankerstange 15 geschraubt ist. Gleichachsig weist der Verbinder 19 ein weiteres Innengewinde 21 mit anderem, im Ausführungsbeispiel kleinerem Durchmesser auf, in das eine Schraube 22 zur Befestigung des Gegenstands 11 geschraubt ist. Der Verbinder 19 verjüngt sich gestuft konisch in Richtung der Ankerstange 15. Ein der Ankerstange 15 fernes Ende des Verbinders 19, das sich in der Putzschicht 14 befindet, ist zylindrisch und bildet eine Anlage für den zu befestigenden Gegenstand 11.

Das Innengewinde 20 bildet eine Befestigungseinrichtung zur Befestigung des Verbinders 19 an der Ankerstange 15. Durch die Durchlässe 6 lässt sich eine aushärtende Verfüllmasse, beispielsweise ein Klebstoff oder Mörtel, in die Hülse 2 einbringen, die die Steifigkeit der Hülse 2 erhöht.

### Bezugszeichenliste

### Abstandshalter zur Befestigung eines Gegenstands an einem eine Dämmschicht aufweisenden Untergrund

- 1: Abstandshalter
- 2: Hülse
- 3: Segment
- 4: Durchgangsloch
- 5: Innengewinde
- 6: Durchlass
- 7: Klaue
- 8: Klaue
- 9: Kragen
- 10: Ansenkung
- 11: Konsole
- 12: Untergrund
- 13: Dämmschicht
- 14: Putz
- 15: Ankerstange
- 16: Sackloch
- 17: Durchgangsloch
- 18: Nut
- 19: Verbinder
- 20: Innengewinde
- 21: Innengewinde
- 22: Schraube

## Patentansprüche

1. Abstandshalter zur Befestigung eines Gegenstands (11) an einem eine Dämmschicht (13) aufweisenden Untergrund (12) mit einer Ankerstange (15), der im Untergrund (12) verankerbar ist, wobei der Abstandshalter (1) eine Hülse (2) mit einem Durchgangsloch (4) aufweist, mit dem sie auf der Ankerstange (15) anordenbar ist, **dadurch gekennzeichnet, dass** die Hülse (2) in Längsrichtung hintereinander angeordnete Segmente (3) aufweist.

2. Abstandshalter nach Anspruch 1, **dadurch gekennzeichnet, dass** die Hülse (2) lochscheibenförmige Segmente (3) aufweist.

3. Abstandshalter nach Anspruch 1, **dadurch gekennzeichnet, dass** die Segmente (3) der Hülse (2) formschlüssig ineinander greifen.

4. Abstandshalter nach Anspruch 1, **dadurch gekennzeichnet, dass** die Hülse (2) spielfrei auf der Ankerstange (15) ist.

5. Abstandshalter nach Anspruch 1, **dadurch gekennzeichnet, dass** die Ankerstange (15) ein Außengewinde und die Segmente (3) ein Innengewinde (5) aufweisen, mit denen sie auf der Ankerstange (15) schraubbar sind.

6. Abstandshalter nach Anspruch 1, **dadurch gekennzeichnet, dass** die Hülse (2) eine Umwicklung aufweist.

7. Abstandshalter nach Anspruch 1, **dadurch gekennzeichnet, dass** die Segmente (3) Durchlässe (6) für eine Verfüllmasse aufweisen.

8. Abstandshalter nach Anspruch 1, **dadurch gekennzeichnet, dass** die Segmente (3) aus einem thermisch isolierenden Material bestehen.

9. Abstandshalter nach Anspruch 1, **dadurch gekennzeichnet, dass** der Abstandshalter (1) einen thermisch isolierenden Verbinder (19) aufweist, der eine Befestigungseinrichtung (20) zur Befestigung an der Ankerstange (15) aufweist und an dem der zu befestigende Gegenstand (11) befestigbar ist.
